(19) Europäisches Patentamt
European Patent Office
Office européen des brevets

(11) EP 2 710 180 B1

(12) # FASCICULE DE BREVET EUROPEEN

(45) Date de publication et mention de la délivrance du brevet:
**08.03.2017 Bulletin 2017/10**

(21) Numéro de dépôt: **12722127.3**

(22) Date de dépôt: **15.05.2012**

(51) Int Cl.:
***D02G 3/48*** (2006.01) ***D04C 1/12*** (2006.01)
***B29D 30/52*** (2006.01) ***B60C 11/02*** (2006.01)
***B60C 9/18*** (2006.01)

(86) Numéro de dépôt international:
**PCT/EP2012/059025**

(87) Numéro de publication internationale:
**WO 2012/156404 (22.11.2012 Gazette 2012/47)**

(54) **BANDAGE AVEC CORDON COMPOSITE DANS LA BANDE DE ROULEMENT**

REIFEN MIT EINEM VERBUNDCORD IN DER LAUFFLÄCHE

TIRE HAVING A COMPOSITE CORD IN THE TREAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.05.2011 FR 1154338**

(43) Date de publication de la demande:
**26.03.2014 Bulletin 2014/13**

(73) Titulaires:
- **Compagnie Générale des Etablissements Michelin
63000 Clermont-Ferrand (FR)**
- **MICHELIN Recherche et Technique S.A.
1763 Granges-Paccot (CH)**

(72) Inventeur: **ABAD, Vincent
F-63040 Clermont-Ferrand cedex 9 (FR)**

(74) Mandataire: **Dequire, Philippe Jean-Marie Denis
M.F.P. Michelin
23, place des Carmes-Déchaux
DGD/PI - F35 - Ladoux
63040 Clermont-Ferrand Cedex 09 (FR)**

(56) Documents cités:
**WO-A1-2011/141669**
**JP-A- 63 045 039**
**JP-A- 2004 339 631**
**US-A- 1 400 301**
**US-A- 2 257 646**
**US-A- 5 957 434**

EP 2 710 180 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine de l'invention

La présente invention est relative aux bandages pneumatiques, et plus particulièrement à un bandage pneumatique dont la bande de roulement incorpore un cordon composite de recreusage.

### Etat de la technique

Dans la très grande majorité des cas, les sculptures de bandes de roulement pour pneumatique pour véhicule poids lourd sont pourvues de rainures circonférentielles, rectilignes, en zigzag ou ondulées, lesdites rainures pouvant être réunies par des rainures et/ou incisions transversales. Les rainures circonférentielles comportent généralement des témoins d'usure, petites plates-formes de mélange caoutchouteux vulcanisé (ou gomme) couvrant sur une certaine longueur circonférentielle le fond de ces rainures, le témoin indiquant la profondeur de sculpture minimale qui doit légalement rester sur la bande de roulement en utilisation. Les sculptures pour véhicules poids lourd sont recreusables (opération par laquelle on peut recreuser de nouvelles rainures), et les pneumatiques ayant de telles sculptures portent sur leurs flancs la mention anglaise "Regroovable" ou le symbole "U". Le recreusage permet d'une part de prolonger le potentiel d'adhérence du pneumatique poids lourd et d'autre part d'accroître de façon importante le rendement kilométrique : de 15 à 30% selon les cas et cela sans pénaliser la possibilité de rechapage, qui est par ailleurs une caractéristique essentielle d'un pneumatique poids lourd. Il faut ajouter que le recreusage permet également une économie de carburant, le pneumatique présentant une résistance au roulement plus faible, du fait de la profondeur réduite des rainures à l'état initial comparativement à celles d'un pneumatique ayant à l'état neuf une profondeur de sculpture totale correspondant à la profondeur de recreusage maximale.

Comme connu en soi, le recreusage d'une rainure peut s'effectuer à l'aide d'une lame arrondie chauffante, manipulée encore souvent par un opérateur. Ladite lame, reliée à un bâti qui prend appui sur la surface de bande de roulement, peut être utilisée manuellement de façon à suivre assez fidèlement le tracé de la rainure sur la surface de la bande de roulement, même dans le cas d'une rainure à tracé non rectiligne. Cette opération de recreusage requiert cependant un certain nombre de précautions. La première d'entre elles consiste à effectuer l'opération de recreusage lorsqu'il reste environ 2 mm de profondeur de rainure, ladite profondeur étant mesurée entre la surface de bande de roulement et la surface radialement extérieure des témoins d'usure placés en fond de rainure. Cette précaution permet une bonne visualisation du dessin de sculpture et ainsi de le reproduire sans difficulté majeure. Connaissant la profondeur de sculpture restante et la profondeur de recreusage préconisée par le manufacturier de pneumatiques, il est alors possible d'ajuster et de régler la hauteur de la lame de recreusage.

Les profondeurs de recreusage généralement indiquées sont des profondeurs théoriques. Si elles sont, dans une majorité de cas, satisfaisantes, et permettent de régler théoriquement la hauteur de lame pour conserver approximativement une certaine épaisseur de gomme entre le fond de rainure recreusée et la face radialement supérieure de l'armature de sommet, les risques d'un recreusage trop profond ne sont pas exclus. Or un recreusage trop poussé peut entraîner des dommages provoquant la destruction prématurée de l'enveloppe de pneumatique. Il peut aussi compromettre la possibilité d'un rechapage économique, c'est-à-dire un rechapage où seule la bande de roulement est changée. Il peut aussi, dans certains cas extrêmes, laisser apparaître, au fond des nouvelles rainures après recreusage, les nappes de l'armature de sommet radialement sous-jacente, ce qui n'est pas admis de manière générale par les législations en vigueur.

Afin de permettre la réalisation d'un recreusage respectant précisément la présence d'une épaisseur de caoutchouc, au-dessus de la face radialement extérieure de l'armature de sommet, minimale et fixée par le manufacturier de pneumatiques, tout en permettant d'accroître au maximum le rendement kilométrique du pneumatique, le brevet US 6 003 576 préconise, dans un pneumatique comprenant une armature de carcasse radiale surmontée radialement d'une armature de sommet formée d'au moins une nappe d'éléments de renforcement, et une bande de roulement pourvue de rainures pouvant être recreusées, de munir les parties de bande de roulement, disposées radialement sous les rainures recreusables, d'indicateurs de profondeur, chaque indicateur comprenant au moins un moyen indiquant la profondeur minimale à atteindre pour un recreusage efficace et la profondeur maximale ne devant en aucun cas être dépassée.

Les indicateurs de profondeur se présentent préférentiellement sous forme d'incisions de largeur faible non nulle placées en fond de rainure soit parallèle à la direction de ladite rainure, soit perpendiculaire à ladite direction, soit les deux simultanément, le moyen indiquant les profondeurs minimale et maximale étant alors la forme géométrique du fond de l'incision indicatrice de profondeur.

Bien qu'ayant conduit à d'énormes progrès dans l'art et la manière de recreuser une bande de roulement, les indicateurs de recreusage n'enlèvent pas, malgré la mécanisation poussée et la robotisation, le risque de passage d'une lame de découpe très près des nappes de l'armature de sommet ; ces indicateurs ne suppriment pas la présence

humaine pour les réglages de profondeur. Par ailleurs, le recreusage est réalisé radialement sous les rainures originelles, conçues en fonction d'une épaisseur de bande de roulement neuve, et non en fonction d'une bande de roulement dont l'épaisseur a fortement diminué et dont le dessin de sculpture optimal n'est pas obligatoirement le dessin conçu pour l'épaisseur normale de bande de roulement.

Il a également été proposé (US 2 148 343) d'incorporer dans la bande de roulement du pneumatique neuf une pluralité de cordons disposés à l'intérieur de ladite bande dans le sens longitudinal. Dès que l'usure de la bande atteint les cordons ces derniers sont éjectés par la force centrifuge et de nouvelles rainures sont alors formées.

Le document EP 1 392 497 B1 propose une bande de roulement comportant intérieurement des intercalaires dont la paroi extérieure vue en section méridienne a en partie un contour identique au contour de la paroi d'une rainure de recreusage à créer. Les intercalaires ont la propriété d'être anti-collants avec le mélange caoutchouteux de la bande de roulement. Ces intercalaires sont munis d'orifices pour créer lors du moulage de l'ébauche du bandage pneumatique des ponts de mélange caoutchouteux entre le matériau de la rainure de recreusage à créer et le reste de la bande de roulement. Ces ponts de gomme empêchent l'éjection du matériau de la rainure de recreusage à créer lorsqu'il arrive en contact avec le sol par usure de la bande de roulement, tout en permettant son extraction par un opérateur par rupture de ces ponts de mélange caoutchouteux.

Le procédé de fabrication de cette bande de roulement est cependant long, complexe et coûteux puisqu'il faut notamment mettre successivement en place dans l'ébauche de bande de roulement les intercalaires puis les cordons de recreusage. Les documents US 1 400 301 et US 2 257 646 divulguent diverses constructions de câbles ou renforts de nappes carcasses. Les câbles ou cordons sont des cordons composites comportant un coeur élastomère et une gaine entourant le coeur élastomère.

Dans ce qui suit, on entend par « cordon » ou « jonc » un produit de section droite sensiblement constante et dont la longueur est très supérieure à toute autre dimension, et par « cordon de recreusage » un cordon destiné à être inséré dans une cavité interne d'une bande de roulement d'un bandage pneumatique ou non-pneumatique en cours de fabrication, puis à être retiré après usure de la bande de roulement en service pour créer une rainure de recreusage circonférentielle. Le cordon de recreusage après insertion dans la bande de roulement forme un anneau circonférentiel continu. Cet anneau peut être rectiligne, en zigzag ou ondulé selon les cas.

**Description brève de l'invention**

L'invention a pour objet un bandage pneumatique ou non-pneumatique avec une bande de roulement, caractérisé en ce que la bande de roulement comporte dans au moins une cavité interne un cordon composite de recreusage comportant un coeur élastomère et une gaine entourant le coeur élastomère, et en ce que la gaine est une tresse cylindrique creuse en fibres entrelacées hélicoïdalement et non jointives.

La tresse de la gaine est par exemple formée de deux séries de fibres entrecroisées, disposées en biais par rapport à la génératrice de la gaine. Entre les fibres non jointives subsistent des espacements qui donnent à la tresse de la gaine une grande déformabilité notamment du diamètre de la gaine en fonction de l'extension de celle-ci dans la direction de sa génératrice. Ces espacements ont aussi l'avantage de permettre, lors de la vulcanisation du bandage pneumatique dans un moule, un contact direct entre le coeur élastomère du cordon disposé dans une cavité de la bande de roulement du bandage pneumatique et le mélange adjacent de la bande de roulement et ainsi la création de ponts de gomme assurant une liaison mécanique dense et homogène du cordon composite de recreusage sur toute sa périphérie.

Le cordon composite de recreusage peut être réalisé par injection du coeur élastomère dans la tresse et être ensuite incorporé aisément dans une cavité d'une bande de roulement, avant la vulcanisation du bandage pneumatique. Selon une variante, on peut aussi tresser une gaine directement autour d'un coeur élastomère existant.

La tresse a aussi l'avantage d'entourer le coeur élastomère pendant la vulcanisation du bandage pneumatique et ainsi de faciliter le maintien de la géométrie de ce coeur élastomère pendant toute la phase de vulcanisation.

La liaison mécanique du cordon composite de recreusage avec le matériau adjacent de la bande de roulement est suffisante pour qu'il ne soit pas éjecté en cours de roulage et pour éviter tout mouvement relatif de ce cordon composite vis-à-vis du reste de la bande de roulement, mouvement source de frottements et donc de dissipation thermique à l'interface.

Les ponts de gomme présentent aussi l'avantage de pouvoir être déchirés manuellement sans outillage spécifique une fois que le cordon composite de recreusage est visible par usure de la bande de roulement du bandage pneumatique et ainsi de permettre une extraction aisée et précise du cordon composite de recreusage en conservant intact le coeur élastomère.

L'extraction du cordon composite de recreusage entraîne l'apparition d'une rainure similaire à une rainure de recreusage dans la sculpture de la bande de roulement. La tresse peut être colorée pour faciliter la détection du niveau d'usure approprié pour l'extraction du cordon composite.

Selon un premier mode de réalisation, la formulation du coeur élastomère du cordon composite de recreusage

est à base d'au moins un élastomère diénique. Préférentiellement, cette composition comporte plus de 30 parties en poids pour cent parties d'élastomère (pce) d'une charge notée A dont les particules sont des nanoparticules dont la taille moyenne est inférieure à 500 µm.

Selon un autre mode de réalisation, le coeur élastomère du cordon de recreusage est à base d'au moins un élastomère thermoplastique, l'élastomère thermoplastique étant un copolymère bloc comprenant au moins un bloc élastomère insaturé et au moins un bloc thermoplastique.

Les cordons selon un mode de réalisation de l'invention sont tels que leur plus grande dimension dans toute section droite est comprise entre 3 et 20 mm et préférentiellement entre 5 et 15 mm.

Ces dimensions de cordons permettent de créer après leur enlèvement de la bande de roulement des rainures ou sillons de largeur axiale comprise entre 3 et 15 mm, ce qui redonne à la sculpture du bandage une excellente capacité d'évacuation de l'eau en roulage sur sol mouillé.

En deçà de 3 mm, l'efficacité des cordons n'est plus suffisante et au-delà de 15 mm, le gain apporté n'est plus sensible.

La section droite du cordon composite peut être de toute forme, notamment sensiblement circulaire, ou carrée, ou rectangulaire ou en forme de U.

L'invention concerne particulièrement les bandages pneumatiques destinés à équiper des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention. L'invention peut aussi s'appliquer aux bandages pneumatiques de véhicules à moteur de type tourisme, SUV (*"Sport Utility Vehicles*"), deux roues (notamment motos), avions...

Les cordons de recreusage selon l'invention sont utilisables pour des bandages pneumatiques, c'est-à-dire gonflés d'air mais aussi pour des bandages non-pneumatiques, c'est-à-dire dont le port de la charge est assuré de façon structurelle et non pneumatique.

**Description détaillée de l'invention**

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Par « pce », on entend : partie en poids pour cent parties d'élastomère.

On entend par l'expression composition « à base de », une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa fabrication et de sa réticulation ou vulcanisation.

**Mesures et tests utilisés**

<u>Caractérisation des charges</u>

La taille moyenne (en masse) des nanoparticules, notée $d_w$, est mesurée de manière classique après dispersion, par désagglomération aux ultrasons, de la charge à analyser dans l'eau ou une solution aqueuse contenant un agent tensioactif.

Pour une charge inorganique telle que silice, la mesure est réalisée au moyen d'un sédimentomètre centrifuge à détection rayons X type « XDC » (X-rays Disk Centrifuge), commercialisé par la société Brookhaven Instruments, selon le mode opératoire qui suit. On réalise une suspension de 3,2 g d'échantillon de charge inorganique à analyser dans 40 ml d'eau, par action durant 8 minutes, à 60% de puissance (60% de la position maxi du *"output control*"), d'une sonde ultrasons de 1500 W (sonificateur Vibracell 3/4 pouce commercialisé par la société Bioblock); après sonification, on introduit 15 ml de la suspension dans le disque en rotation ; après sédimentation pendant 120 minutes, la distribution en masse des tailles de particules et la taille moyenne en masse des particules $d_w$ sont calculées par le logiciel du sédimentomètre XDC ( $d_w = \sum(n_i \times d_i^5) / \sum(n_i \times d_i^4)$ avec $n_i$ nombre d'objets de la classe de taille ou diamètre $d_i$).

Pour du noir de carbone, on opère avec une solution aqueuse à 15% d'éthanol et 0,05% d'un agent tensioactif non ionique (% en volume). La détermination a lieu au moyen d'un photosédimentomètre centrifuge type « DCP » (Disk Centrifuge Photosedimentometer commercialisé par la société Brookhaven Instruments). Une suspension de 10 mg de

noir de carbone est préalablement réalisée dans 40 ml d'une solution aqueuse à 15% d'éthanol et 0,05% d'un agent tensioactif non ionique (% en volume), par action durant 10 minutes à 60% de puissance (soit 60 % de la position maxi du "tip amplitude") d'une sonde ultrasons de 600 W (Sonificateur Vibracell 1/2 pouce commercialisé par la société Bioblock). Pendant la sonification, un gradient composé de 15 ml d'eau (à 0,05% d'un tensioactif non ionique) et de 1 ml d'éthanol est injecté dans le disque du sédimentomètre en rotation à 8000 tours/min afin de constituer un *"step gradient"*. Ensuite, 0,3 ml de la suspension de noir de carbone est injecté à la surface du gradient ; après sédimentation durant 120 min, la distribution en masse des tailles de particule et la taille moyenne en masse $d_w$ sont calculées par le logiciel du sédimentomètre, comme indiqué ci-dessus.

**Gaine**

Une première caractéristique essentielle du cordon composite selon l'invention est de comporter une gaine constituée d'une tresse cylindrique creuse en fibres entrelacées hélicoïdalement non jointives. Cette gaine entoure le coeur élastomère du cordon composite.

La tresse est par exemple formée de deux séries de fibres entrecroisées, disposées en biais par rapport à la génératrice de la tresse. Les fibres non jointives définissent entre elles des espacements qui donnent à la tresse une grande déformabilité notamment du diamètre de la tresse en fonction de l'extension de celle-ci dans la direction de sa génératrice.

Ces espacements ont aussi l'avantage de permettre, lors de la vulcanisation du cordon dans une cavité d'une bande de roulement de bandage pneumatique, un contact direct entre le coeur élastomère du cordon composite et le mélange adjacent de la bande de roulement et ainsi la création de ponts de gomme assurant un ancrage mécanique dense et homogène du cordon sur toute sa périphérie.

De préférence, la géométrie des fibres de la tresse et leur assemblage sont tels que la surface des espacements est comprise entre 5 et 30 % de la surface de la tresse. En dessous de 5 %, le nombre de ponts de gomme devient insuffisant pour assurer un bon ancrage du cordon dans la bande de roulement et au-delà de 30 %, il devient difficile d'extraire sans outil particulier le cordon de recreusage de la bande de roulement. Très préférentiellement la surface des espacements est comprise entre 10 et 20 % de la surface de la tresse.

Ces tresses sont à diamètre extensible. Elles sont usuellement tressées à partir de mono filaments de section ronde ou aplatie en matière thermoplastique.

Préférentiellement, les fibres de la tresse sont choisies dans le groupe constitué par les polyamides, les polyesters, les polysulfones, les poly(sulfure de phénylène), les poly(éther-cétones), les polyétherimides, les poly(amide-imide), les polyimides, les élastomères thermoplastiques, leurs mélanges et leurs alliages.

Les polyamides peuvent être choisis dans le groupe des polyamides aliphatiques tels les polyamides 6, les polyamides 6-6, et leurs mélanges.

Les polyamides peuvent aussi être choisis dans le groupe des polyamides semi-aromatiques tels les poly(métaxylène-adipamide) (MXD-6), les polyphtalamides, les copolyamides, et leurs mélanges.

De préférence, les polyesters sont choisis parmi les polyéthylène téréphtalates (PET), les polybutylène téréphtalates (PBT), les polycarbonates (PC) et les polyéthylène naphtoates (PEN) et leurs mélanges.

On peut aussi avantageusement choisir comme fibres pour former la tresse des fibres d'élastomères thermoplastiques choisis dans le groupe des poly(éther-bloc-amide) (PEBA), des polyuréthannes thermoplastiques (TPU), des copolymères éther-esters (COPE), et leurs mélanges.

De préférence, les copolymères éther-esters (COPE) sont choisis parmi les polyester-éthers et les polyester-esters.

De telles tresses extensibles sont bien connues et disponibles commercialement. A titre d'exemple, la société Gremco commercialise des tresses tubulaires tressées expansibles fabriquées à partir de monofilaments de polyamide 6.6 sous la marque GREMFLEX® PA6.6. Une observation à la binoculaire permet aisément de déterminer la surface moyenne d'espacements pour une surface donnée de la tresse. Cette valeur moyenne est de l'ordre de 15 % dans ce cas d'espèce (voir figure 17). La société Gremco commercialise aussi parmi beaucoup d'autres des tresses similaires fabriquées à partir de mono filaments de polyester PBT sous la marque GREMFLEX® FR.

**Coeur élastomère**

Une seconde caractéristique essentielle du cordon composite selon l'invention est de comporter un coeur élastomère.

Selon un premier mode de réalisation, la composition de ce coeur élastomère est à base d'un élastomère diénique. Préférentiellement, la composition comporte plus de 30 pce d'une charge notée A dont les particules sont des nanoparticules dont la taille moyenne en masse est inférieure à 500 nm.

Elastomère diénique

Par élastomère ou caoutchouc « diénique », doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

L'élastomère diénique du coeur élastomère est choisi préférentiellement dans le groupe des élastomères diéniques fortement insaturés constitué par les polybutadiènes (BR), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Conviennent notamment les polybutadiènes ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse, mesurée selon ASTM D3418) entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est majoritairement (pour plus de 50 pce) un élastomère isoprénique. Par « élastomère isoprénique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode préférentiel de réalisation de l'invention, le coeur élastomère comprend un coupage d'un (un ou plusieurs) élastomère diénique dit « à haute Tg » présentant une Tg comprise entre - 70°C et 0°C et d'un (un ou plusieurs) élastomère diénique dit « à basse Tg » présentant une Tg comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste ) de préférence en un polybutadiène (BR) présentant un taux (% molaire) d'enchaînements cis-1,4 supérieur à 90%.

Selon un autre mode particulier de réalisation de l'invention, la composition du coeur élastomère comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition du coeur

élastomère comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions formulées selon l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Charge A

On peut utiliser tout type de charge renforçante connue pour ses capacités à renforcer une composition de caoutchouc utilisable pour la fabrication de bandes de roulement de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs conventionnellement utilisés dans les bandes de roulement des pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par « charge inorganique renforçante », doit être entendu dans la présente demande, par définition, toute charge inorganique ou minérale (quelles que soient sa couleur et son origine (naturelle ou de synthèse), encore appelée charge « blanche », charge « claire » voire « charge non noire » (*"non-black filler"*) par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites « HDS »), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16387.

La charge inorganique renforçante utilisée, en particulier s'il s'agit de silice, a de préférence une surface BET comprise entre 45 et 400 $m^2/g$, plus préférentiellement comprise entre 60 et 300 $m^2/g$.

De manière préférentielle, pour le coeur élastomère, le taux de charge renforçante A totale (noir de carbone et/ou charge inorganique renforçante telle que silice) est supérieur à 30 pce et préférentiellement compris entre 40 et 100 pce ; cela permet d'assurer au coeur élastomère du cordon une bonne résistance à la fissuration tout en conservant une faible hystérésis.

De manière préférentielle, la taille moyenne (en masse) des nanoparticules est comprise entre 20 et 200 nm, plus préférentiellement entre 20 et 150 nm.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits « symétriques » ou « asymétriques » selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits

« symétriques » répondant à la formule générale (I) suivante:

(I) $Z - A - S_x - A - Z$,

dans laquelle :

- x est un entier de 2 à 8 (de préférence de 2 à 5) ;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Z répond à l'une des formules ci-après :

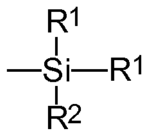 ; 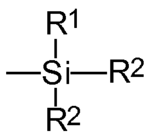 ; 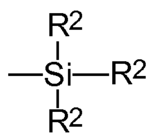 ,

dans lesquelles :

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle) ;
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

A titre d'exemples de silanes polysulfurés, on citera plus particulièrement les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, ou le disulfure de bis-(triéthoxysilylpropyle), en abrégé TESPD. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane ($R^2$ = OH dans la formule I ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de coeur élastomère selon un objet de l'invention, la teneur en agent de couplage est préférentiellement comprise entre 3 et 12 pce, plus préférentiellement entre 4 et 9 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Additifs divers

La composition du coeur élastomère peut comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

La formulation du coeur élastomère peut également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge

dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Le coeur élastomère peut également comporter, à titre d'agent plastifiant préférentiel non aromatique ou très faiblement aromatique, au moins un composé choisi dans le groupe constitué par les huiles naphténiques, paraffiniques, huiles MES, huiles TDAE, les plastifiants esters (par exemple les trioléates de glycérol), les résines hydrocarbonées présentant une haute Tg, de préférence supérieure à 30 °C, telles que décrites par exemple dans les demandes WO 2005/087859, WO 2006/061064 et WO 2007/017060, et les mélanges de tels composés. Le taux global d'un tel agent plastifiant préférentiel est de préférence compris entre 10 et 100 pce, plus préférentiellement compris entre 20 et 80 pce, notamment dans un domaine de 10 à 50 pce.

Parmi les résines plastifiantes hydrocarbonées ci-dessus (on rappelle que l'appellation « résine » est réservée par définition à un composé solide), on citera notamment les résines d'homo- ou copolymères d'alphapinène, betapinène, dipentène ou polylimonène, coupe C5, par exemple de copolymère coupe C5/styrène ou de copolymère coupe C5/coupe C9, utilisables seules ou en combinaison avec des huiles plastifiantes comme par exemple des huiles MES ou TDAE.

Selon un second mode de réalisation du coeur élastomère, la composition de ce coeur élastomère est à base d'au moins un élastomère thermoplastique, l'élastomère thermoplastique étant un copolymère bloc comprenant au moins un bloc élastomère insaturé et au moins un bloc thermoplastique.

Elastomère thermoplastique (TPE)

Les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

L'élastomère thermoplastique utilisé pour la mise en oeuvre de ce mode de réalisation de l'invention est un copolymère à blocs dont la nature chimique des blocs thermoplastiques et élastomères peut varier.

Structure du TPE

La masse moléculaire moyenne en nombre (notée Mn) du TPE est préférentiellement comprise entre 30 000 et 500 000 g/mol, plus préférentiellement comprise entre 40 000 et 400 000 g/mol. En dessous des minima indiqués, la cohésion entre les chaînes d'élastomère du TPE, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la mise en oeuvre. Ainsi, on a constaté qu'une valeur comprise dans un domaine de 50 000 à 300 000 g/mol était particulièrement bien adaptée, notamment à une utilisation du TPE dans une composition pour cordon de recreusage de pneumatique.

La masse moléculaire moyenne en nombre (Mn) de l'élastomère TPE est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 μm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 μl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE est de préférence inférieure à 3 ; plus préférentiellement inférieure à 2 et encore plus préférentiellement inférieure à 1,5.

Dans la présente demande, lorsqu'il est fait référence à la température de transition vitreuse du TPE, il s'agit de la Tg relative au bloc élastomère. Le TPE présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances du coeur élastomère du cordon composite lors d'une utilisation à très basse température ; pour une telle utilisation, la Tg du TPE est plus préférentiellement encore inférieure ou égale à -10°C. De manière préférentielle également, la Tg du TPE est supérieure à -100°C.

De manière connue, les TPE présentent deux pics de température de transition vitreuse (Tg, mesurée selon

ASTM D3418), la température la plus basse, étant relative à la partie élastomère du TPE, et la température la plus haute, étant relative à la partie thermoplastique du TPE. Ainsi, les blocs souples des TPE se définissent par une Tg inférieure à la température ambiante (25°C), tandis que les blocs rigides ont une Tg supérieure à 80°C.

Pour être de nature à la fois élastomère et thermoplastique, le TPE doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Les TPE peuvent être des copolymères avec un petit nombre de blocs (moins de 5, typiquement 2 ou 3), auquel cas ces blocs ont des masses élevées, supérieures à 15000 g/mol. Ces TPE peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène pour un copolymère blocs styrène/ butadiène/ styrène).

Les TPE peuvent aussi comprendre un grand nombre de blocs (plus de 30, typiquement de 50 à 500) plus petits, auquel cas ces blocs ont des masses peu élevées, par exemple de 500 à 5000 g/mol, ces TPE seront appelés TPE multiblocs par la suite, et sont un enchaînement blocs élastomères - blocs thermoplastiques.

Selon une première variante, le TPE se présente sous une forme linéaire. Par exemple, le TPE est un copolymère dibloc : bloc thermoplastique / bloc élastomère. Le TPE peut aussi être un copolymère tribloc : bloc thermoplastique / bloc élastomère / bloc thermoplastique, c'est-à-dire un bloc élastomère central et de deux blocs thermoplastiques terminaux, à chacune des deux extrémités du bloc élastomère. Egalement, le TPE multibloc peut être un enchaînement linéaire de blocs élastomères - blocs thermoplastiques.

Selon une autre variante de ce mode de réalisation de l'invention, le TPE utile pour les besoins de l'invention se présente sous une forme étoilée à au moins trois branches. Par exemple, le TPE peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une autre variante de ce mode de réalisation de l'invention, le TPE se présente sous une forme branchée ou dendrimère. Le TPE peut alors se composer d'un bloc élastomère branché ou dendrimère et d'un bloc thermoplastique, situé à l'extrémité des branches du bloc élastomère dendrimère.

Nature des blocs élastomères

Les blocs élastomères des TPE peuvent être tous les élastomères connus de l'homme de l'art. Ils peuvent être à chaîne carbonée (polyisoprène par exemple) ou non (silicones par exemple). Ils possèdent une Tg inférieure à 25°C, préférentiellement inférieure à 10°C, plus préférentiellement inférieure à 0°C et très préférentiellement inférieure à -10°C. De manière préférentielle également, la Tg bloc élastomère du TPE est supérieure à -100°C.

Pour les blocs élastomères à chaîne carbonée, si la partie élastomère du TPE ne comporte pas d'insaturation éthylénique, on parlera d'un bloc élastomère saturé. Si le bloc élastomère du TPE comporte des insaturations éthyléniques (c'est-à-dire des doubles liaisons carbone - carbone), on parlera alors d'un bloc élastomère insaturé ou diénique. Dans le cadre de ce mode de réalisation de l'invention, on choisit des blocs élastomères insaturés pour permettre une bonne liaison mécanique avec les mélanges adjacents de la bande de roulement par covulcanisation. Il est à noter que la covulcanisation avec le mélange adjacent de la bande de roulement peut se faire même si le coeur élastomère ne comporte pas de système de vulcanisation propre.

Dans le cas des blocs élastomères insaturés, ce bloc élastomère du TPE est composé majoritairement d'une partie élastomère diénique. Par majoritairement, on entend un taux pondéral en monomère diénique le plus élevé par rapport au poids total du bloc élastomère, et de préférence un taux pondéral de plus de 50%, plus préférentiellement de plus de 75% et encore plus préférentiellement de plus de 85%. Alternativement, l'insaturation du bloc élastomère insaturé peut provenir d'un monomère comportant une double liaison et une insaturation de type cyclique, c'est le cas par exemple dans le polynorbornène.

Préférentiellement, des diènes conjugués en $C_4$ - $C_{14}$ peuvent être polymérisés ou copolymérisés pour constituer un bloc élastomère diénique. De préférence, ces diènes conjugués sont choisis parmi l'isoprène, le butadiène, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est l'isoprène ou le butadiène ou un mélange contenant de l'isoprène et/ou

du butadiène.

Selon une variante, les monomères polymérisés pour former la partie élastomère du TPE peuvent être copolymérisés, de manière statistique, avec au moins un autre monomère de manière à former un bloc élastomère. Selon cette variante, la fraction molaire en monomère polymérisé autre qu'un monomère éthylénique, par rapport au nombre total de motifs du bloc élastomère, doit être telle que ce bloc garde ses propriétés d'élastomère. Avantageusement la fraction molaire de cet autre co-monomère peut aller de 0 à 50%, plus préférentiellement de 0 à 45% et encore plus préférentiellement de 0 à 40%.

A titre d'illustration, cet autre monomère susceptible de copolymériser avec le monomère premier peut être choisi parmi les monomères éthyléniques tels que définis précédemment (par exemple l'éthylène), les monomères diènes, plus particulièrement, les monomères diènes conjugués ayant 4 à 14 atomes de carbone tels que définis précédemment (par exemple le butadiène), les monomères de type vinylaromatiques ayant de 8 à 20 atomes de carbone tels que définis ci-après ou encore, il peut s'agir d'un monomère tel que l'acétate de vinyle).

Lorsque le co-monomère est de type vinylaromatique, il représente avantageusement une fraction en motifs sur le nombre total de motifs du bloc thermoplastique de 0 à 50%, préférentiellement allant de 0 à 45% et encore plus préférentiellement allant de 0 à 40%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Selon ce mode de réalisation de l'invention, les blocs élastomères du TPE présentent au total, une masse moléculaire moyenne en nombre ("Mn") allant de 25 000 g/mol à 350 000 g/mol, de préférence de 35 000 g/mol à 250 000 g/mol de manière à conférer au TPE de bonnes propriétés élastomériques et une tenue mécanique suffisante.

Le bloc élastomère peut également être un bloc comprenant plusieurs types de monomères diéniques ou styréniques tels que définis ci-dessus.

Le bloc élastomère peut également être constitué de plusieurs blocs élastomères tels que définis ci-dessus.

Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise oeuvre.

Pour les besoins de ce mode de réalisation de l'invention, les élastomères TPE comprennent un ou plusieurs bloc(s) thermoplastique(s) ayant une Tg (ou Tf, le cas échéant) supérieure ou égale à 80°C et constitué(s) à partir de monomères polymérisés. Préférentiellement, ce bloc thermoplastique a une Tg (ou Tf, le cas échéant) comprise dans un domaine variant de 80°C à 250°C. De préférence, la Tg (ou Tf, le cas échéant) de ce bloc thermoplastique est préférentiellement de 80°C à 200°C, plus préférentiellement de 80°C à 180°C.

La proportion des blocs thermoplastiques par rapport au TPE, tel que défini pour la mise en oeuvre de ce mode de réalisation de l'invention, est déterminée d'une part par les propriétés de thermoplasticité que doit présenter ledit copolymère. Les blocs thermoplastiques ayant une Tg (ou Tf, le cas échéant) supérieure ou égale à 80°C sont préférentiellement présents dans des proportions suffisantes pour préserver le caractère thermoplastique de l'élastomère selon l'invention. Le taux minimum de blocs thermoplastiques ayant une Tg (ou Tf, le cas échéant) supérieure ou égale à 80°C dans le TPE peut varier en fonction des conditions d'utilisation du copolymère. D'autre part, la capacité du TPE à se déformer lors de la préparation du bandage pneumatique peut également contribuer à déterminer la proportion des blocs thermoplastiques ayant une Tg (ou Tf, le cas échéant) supérieure ou égale à 80°C.

Les blocs thermoplastiques ayant une Tg (ou Tf, le cas échéant) supérieure ou égale à 80°C peuvent être constitués à partir de monomères polymérisés de diverse nature, notamment, ils peuvent constituer les blocs suivants ou leurs mélanges :

- les polyoléfines (polyéthylène, polypropylène) ;
- les polyuréthannes ;
- les polyamides ;
- les polyesters ;
- les polyacétals ;

- les polyéthers (polyoxyde d'éthylène, polyphénylène éther) ;
- les polysulfures de phénylène ;
- les polyfluorés (FEP, PFA, ETFE) ;
- les polystyrènes (détaillés ci-dessous) ;
- les polycarbonates ;
- les polysulfones ;
- le polyméthylméthacrylate
- le polyétherimide
- les copolymères thermoplastiques tels que le copolymère acrylonitrile-butadiène-styrène (ABS).

Les blocs thermoplastiques ayant une Tg (ou Tf, le cas échéant) supérieure ou égale à 80°C peuvent aussi être obtenus à partir de monomères choisis parmi les composés suivants et leurs mélanges :

- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthylindène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Les polystyrènes sont obtenus à partir de monomères styréniques. Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de ce mode de réalisation de l'invention, le taux pondéral de styrène, dans l'élastomère TPE, est compris entre 5% et 50%. En dessous du minimum indiqué, le caractère thermoplastique de l'élastomère risque de diminuer de manière sensible tandis qu'au-dessus du maximum préconisé, l'élasticité du cordon composite peut être affectée. Pour ces raisons, le taux de styrène est plus préférentiellement compris entre 10% et 40%.

Selon une variante de ce mode de réalisation de l'invention, le monomère polymérisé tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone, tels qu'ils sont définis dans la partie concernant le bloc élastomère.

Selon de ce mode de réalisation de l'invention, les blocs thermoplastiques du TPE présentent au total, une masse moléculaire moyenne en nombre ("Mn") allant de 5 000 g/mol à 150 000g/mol, de manière à conférer au TPE de bonnes propriétés élastomériques et une tenue mécanique suffisante et compatible avec l'utilisation en cordon de recreusage de pneumatique.

Le bloc thermoplastique peut également être constitué de plusieurs blocs thermoplastiques tels que définis ci-dessus.

Exemples de TPE

Par exemple, le TPE est un copolymère dont la partie élastomère est insaturée, et qui comporte des blocs styrènes et des blocs diènes, ces blocs diènes étant en particulier des blocs isoprène ou butadiène. Plus préférentiellement, cet élastomère TPE est choisi dans le groupe suivant, constitué de copolymères diblocs, triblocs linéaires ou

étoilés : styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Par exemple également, le TPE est un copolymère linéaire ou étoilé dont la partie élastomère comporte une partie saturée et une partie insaturée comme par exemple le styrène/ butadiène/ butylène (SBB), le styrène/ butadiène/ butylène/ styrène (SBBS) ou un mélange de ces copolymères.

A titre d'exemples d'élastomères TPE commercialement disponibles, on peut citer les élastomères de type SIS commercialisés par Kuraray, sous le nom « Hybrar 5125 », ou commercialisés par Kraton sous le nom de « D1161 » ou encore les élastomères de type SBS linéaire commercialisé par Polimeri Europa sous la dénomination « Europrene SOLT 166 » ou SBS étoilé commercialisés par Kraton sous la dénomination « D1184 ». Des élastomères TPE insaturés et époxydés, tels que par exemple SBS, sont aussi connus et disponibles commercialement, par exemple auprès de la société Daicel sous la dénomination "Epofriend".

Quantité de TPE

Si d'éventuels autres élastomères sont utilisés dans la composition, l'élastomère TPE constitue l'élastomère majoritaire en poids ; il représente alors au moins 50%, de préférence au moins 70% en poids, plus préférentiellement au moins 75% en poids de l'ensemble des élastomères présents dans la composition du coeur élastomère. De manière préférentielle également, l'élastomère TPE représente au moins 95% (en particulier 100%) en poids de l'ensemble des élastomères présents dans la composition du coeur élastomère.

Ainsi, la quantité d'élastomère TPE est comprise dans un domaine qui varie de 50 à 100 pce, préférentiellement de 70 à 100 pce et notamment de 75 à 100 pce. De manière préférentielle également, la composition contient de 95 à 100 pce d'élastomère TPE. Le ou les élastomères TPE sont préférentiellement le ou les seuls élastomères du coeur élastomère du cordon composite.

Elastomère Non Thermoplastique

Dans ce second mode de réalisation d'un coeur élastomère selon l'invention à base d'un élastomère thermoplastique, l'élastomère thermoplastique décrit précédemment est suffisant à lui seul pour que soit utilisable le cordon composite selon l'invention.

La composition du cordon composite selon ce mode de réalisation de l'invention, peut comporter au moins un (c'est-à-dire un ou plusieurs) caoutchouc diénique à titre d'élastomère non thermoplastique, ce caoutchouc diénique pouvant être utilisé seul, ou en coupage avec au moins un (c'est-à-dire un ou plusieurs) autre caoutchouc ou élastomère non thermoplastique.

Le taux d'élastomère non thermoplastique est compris dans un domaine variant de 0 à moins de 50 pce, préférentiellement de 0 à moins de 30 pce, plus préférentiellement de 0 à 25 pce, et plus préférentiellement encore de 0 à 5 pce. De manière préférentielle également, le coeur élastomère du cordon composite selon ce mode de réalisation de l'invention ne contient pas d'élastomère non thermoplastique.

Les élastomères diéniques peuvent être des élastomères diéniques tels que précédemment décrits. Il est aussi possible d'utiliser des élastomères diéniques dits « essentiellement insaturés ».

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques « essentiellement insaturés », on entend en particulier par élastomère diénique « fortement insaturé » un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques "essentiellement saturés" (taux de motifs d'origine diénique faible ou très faible, toujours inférieur à 15%).

Autres constituants

La composition du coeur élastomère à base d'au moins un élastomère thermoplastique peut aussi comprendre comme constituants additionnels des charges renforçantes, des plastifiants et des additifs divers tels que précédemment décrits.

Préparation

Les élastomères TPE peuvent être mis en oeuvre de façon classique pour des TPE, par extrusion ou moulage,

par exemple à partir d'une matière première disponible sous la forme de billes ou de granulés.

Le coeur élastomère à base d'un élastomère thermoplastique du cordon composite selon un mode de réalisation de l'invention est préparé de façon classique, par exemple, par incorporation des différents composants dans une extrudeuse bi-vis, de façon à réaliser la fusion de la matrice et une incorporation de tous les ingrédients, puis utilisation d'une filière permettant de réaliser le profilé.

**Description des Figures**

Les figures annexées illustrent une machine de réalisation d'une bande de roulement avec cordon de recreusage incorporé ainsi que de telles bandes de roulement :

- les figures 1 et 2 sont deux vues respectivement en perspective et en coupe verticale transversale d'un nez d'une machine de réalisation d'une bande de roulement avec cordon de recreusage ;
- les figures 3 à 4 sont deux vues respectivement en perspective et de face de la lame de la machine de la figure 1 ;
- la figure 5 est une vue en section de la bande de roulement obtenue par le passage sous la lame de la figure 3 ;
- la figure 6 est une vue analogue à la figure 1 montrant l'implantation de la lame de la figure 3 sur la machine ;
- les figures 7 et 8 sont deux vues analogues à la figure 5 montrant sur deux bandes de roulement de bandages pneumatiques différents les cordons introduits dans les sillons ;
- la figure 9 est une vue analogue à la figure 6 montrant les organes de guidage des cordons dans les sillons sur la machine ;
- la figure 10 est une vue en élévation de la partie de la machine illustrée à la figure 9 ;
- les figures 11 et 12 sont des vues analogues aux figures 7 et 8 montrant la section de la bande de roulement lorsque les sillons sont refermés ;
- la figure 13 est une vue analogue à la figure 9 montrant les organes de comblement de la machine de la figure 1 ;
- la figure 14 est une vue en perspective de l'un de ces organes ;
- la figure 15 est une vue en coupe transversale de la bande de roulement du bandage pneumatique fabriquée au moyen de la machine ; et
- la figure 16 illustre un exemple de cordon composite selon l'invention ;
- la figure 17 est un agrandissement de la figure 16 ;
- la figure 18 présente une coupe partielle d'un bandage pneumatique dont la bande de roulement comporte un cordon composite selon l'invention ; et
- la figure 19 montre la coupe de la figure 18 après décorticage partiel du cordon composite selon l'invention.

**Exemples de réalisation de l'invention**

Fabrication du cordon composite

La réalisation d'un coeur élastomère à base d'un TPE a déjà été décrite.

La composition du coeur élastomère à base d'un élastomère diénique est fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 110°C et 190°C, de préférence entre 130°C et 180°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

Le procédé pour préparer une composition d'un tel coeur élastomère comporte par exemple au moins les étapes suivantes :

- incorporer à un élastomère diénique, au cours d'une première étape (dite « non-productive »), le ou les charges, en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite, au cours d'une seconde étape (dite « productive »), le système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (élastomère diénique, charges et agent de couplage si nécessaire, système de plastification), puis dans un deuxième temps, par exemple après une à deux minutes de malaxage, les autres additifs,

éventuels agents de recouvrement ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation est préférentiellement un système de vulcanisation à base de soufre et d'un accélérateur. On peut utiliser tout composé susceptible d'agir comme accélérateur de vulcanisation des élastomères diéniques en présence de soufre, en particulier ceux choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés. De préférence, on utilise un accélérateur primaire du type sulfénamide.

A ce système de vulcanisation peuvent venir s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), etc.. Le taux de soufre est par exemple compris entre 0,5 et 3,0 pce, celui de l'accélérateur primaire entre 0,5 et 5,0 pce.

La composition finale du coeur élastomère peut ensuite être calandrée, par exemple sous la forme de feuilles ou de plaques. Ces produits intermédiaires sont ensuite extrudés en une ou plusieurs opérations pour donner la géométrie finale du coeur du cordon composite.

Les coeurs élastomères sont ensuite introduits dans une gaine formée d'une tresse cylindrique creuse en fibres entrelacées pour former un cordon composite. Les cordons composites complets peuvent alors être enroulés autour de bobines.

Les cordons composites sont utilisables pour être disposés dans toute cavité interne de bande de roulement de bandages pneumatiques pour véhicule automobile tel qu'un véhicule de type deux roues, tourisme ou industriel.

La figure 16 présente une vue en perspective d'un cordon composite 8. Ce cordon composite comprend une gaine 84 constituée d'une tresse formée de fibres entrelacées 85 et un coeur élastomère 83. La gaine est interrompue pour permettre de visualiser le coeur 83. Le coeur élastomère a dans l'exemple présenté une section circulaire.

La figure 17 est un agrandissement de la figure 16 qui illustre l'entrelacement des fibres 85 constituées de matériau thermoplastique tel du polyamide 6.6. Les fibres sont des mono filaments de polyamide de sections aplaties qui forment entre elles un entrelacement laissant vide des espacements 87. A travers les espacements 87, on distingue le coeur élastomère 83. Cet agrandissement permet d'estimer la surface totale des espacements relativement à la surface de la gaine. Dans l'exemple présenté, ce rapport est de l'ordre de 15 %.

Fabrication d'une bande de roulement avec cordon composite de recreusage

Selon un mode de réalisation :

- on extrude une bande de gomme ;
- on forme au moins un sillon dans la bande ;
- on fournit au moins un cordon composite à partir d'une bobine ; et
- on insère le cordon composite dans le ou chaque sillon.

Les cordons composites ou cordons sont réalisés comme précédemment indiqué en préalable à la formation de la bande de gomme et séparément de cette dernière. Il suffit alors de les disposer dans le sillon et de refermer ce dernier. On enfouit donc les cordons dans la gomme suite à sa mise en forme. Ce procédé limite la quantité de rebuts pour défaut de fabrication en raison du fait qu'il permet de s'affranchir des étapes de stabilisation du procédé au lancement de chaque série de fabrication.

De préférence, pour chaque section de la bande, on extrude la section et on forme le sillon dans la section simultanément.

Nous allons décrire, en référence aux figures 1 à 14, un mode de réalisation d'une machine qui est, en l'espèce, une machine d'extrusion servant à la réalisation d'une bande de roulement pour la fabrication d'une ébauche crue de bandage pneumatique de véhicule.

On a illustré à la figure 15 une portion 2 d'une coupe d'un bandage pneumatique résultant de cette fabrication après vulcanisation de l'ébauche, la coupe étant prise dans un plan radial par référence à un axe 3 du bandage pneumatique. La bande de roulement ou bande 4 s'étend en périphérie du bandage pneumatique entre les flancs de ce dernier et sur sa carcasse 5, en périphérie de cette dernière. La bande 4 présente une face périphérique externe 6 formant la surface par laquelle le bandage pneumatique sera en contact avec le sol. Cette face a une forme générale cylindrique à section circulaire.

La bande 4 comprend un corps principal formé de gomme, laquelle comprend de façon classique un mélange d'élastomères naturel et synthétique ainsi que différents produits et adjuvants.

La bande 4 comprend en outre plusieurs cordons ou joncs 8 qui sont en l'espèce au nombre de cinq, ce nombre n'étant pas limitatif. Les cordons ont chacun une forme filaire, à section transversale circulaire comme c'est le cas aux figures 7, 11 et 15 ou carrée comme dans le cas des figures 8 et 12. Les cordons sont noyés dans le corps et s'étendent à distance des deux faces principales externe et interne de la bande. Chaque cordon forme un cercle coaxial au pneumatique et s'étend dans un plan perpendiculaire à l'axe 3. Les cordons peuvent avoir des profils transversaux identiques ou différents et peuvent être constitués de matériaux identiques ou différents. Les cordons sont réalisés individuellement, préalablement et séparément du corps, puis enroulés sur des bobines 9 (voir fig. 2) qui sont ensuite amenées sur la machine.

Le nez 10 de la machine d'extrusion comporte un bâti 12 comprenant deux montants verticaux 14 de forme plane disposés parallèlement l'un à l'autre et en regard et à distance l'un de l'autre. La plupart des organes du nez s'étendent dans l'espace aménagé entre les deux montants 14.

Le nez comprend un conduit 16, illustré notamment en partie droite de la figure 2 et servant pour l'amenée de la gomme destinée à être extrudée pour former le corps. Le nez 10 comprend un cylindre ou rouleau 18 disposé à l'embouchure aval du conduit 16 et présentant une face périphérique cylindrique 23 à section circulaire. Le nez comprend en outre un ensemble de pièces 20 formant une voûte 22 qui délimite avec la face 23 une chambre 25 de mise en pression du matériau à extruder, sur laquelle débouche le conduit 16. Les pièces 20 sont rigidement fixées au bâti 12, tandis que le rouleau 18 est monté mobile à rotation par rapport aux montants 14 autour de son axe horizontal 24 dans le sens antihoraire sur la figure 2. Le nez 10 comprend une lame profilée 26 s'étendant en aval de la chambre 25 et en regard de la face 23 du rouleau. En aval de la lame, le nez comprend un ensemble 30 à roulettes de pose 32 servant à introduire les cordons dans les sillons réalisés préalablement, ainsi qu'un ensemble de roulettage 34 servant à refermer les sillons sur les cordons ainsi disposés.

En références aux figures 3 et 4, la lame profilée 26 comprend un corps principal 28 de forme allongée de l'un à l'autre des montants 14 et rigidement fixé à ceux-ci. Le corps 28 a une face inférieure 36 présentant des cavités et des reliefs et destinée à donner sa forme à la face supérieure 6 de la bande de roulement par l'effet du passage de la gomme entre cette face 36 et la face 23 du rouleau. Ces deux éléments forment ainsi un orifice d'extrusion qui confère sa forme à la section de la bande 4 lors du passage du matériau.

La lame 26 comprend de plus un support 38 portant des socs de charrue 40 dont le nombre égale celui des cordons 8 que la bande est destinée à recevoir, cinq en l'espèce. Comme illustré notamment à la figure 2, chacun des socs 40 présente une forme générale en « L », la partie la plus longue du « L » s'étendant dans une direction proche de la direction verticale et proche de la direction radiale à l'axe 24, et étant enfilée dans un orifice dédié du support 38 dans lequel elle est montée mobile à coulissement suivant cette direction.

La lame 26 comprend pour chaque soc 40 des moyens de fixation rigides au corps 28, formés en l'espèce pour chaque soc par deux vis de fixation 42 traversant une partie du support et serrant le soc contre une face interne du support. Cet agencement permet de régler la position du soc par rapport au corps 28 suivant la direction précitée et donc de régler la profondeur du sillon 44 réalisé par le soc correspondant dans la bande 4, par exemple suivant le modèle de bandage pneumatique en cours de fabrication.

Les sillons 44 en eux-mêmes sont générés par la pénétration de la base ou petit côté du « L » de chaque soc 40 dans le matériau extrudé formant la bande de gomme. Les sillons sont générés par le fait que la base de chaque soc s'étend en saillie de la face 36 du corps 28, ou plus précisément de certaines zones de cette face, comme illustré à la figure 4. Le petit coté du « L » est orienté de sorte que le soc pénètre sous la partie profilée de la lame d'extrusion. Ce montage particulier permet de disposer la partie amont du soc dans une zone où la pression au sein de la bande n'est pas encore nulle ce qui permet de faciliter la pénétration du soc dans le matériau de la bande ainsi que la qualité du moulage.

La face 36 présente au droit de chaque soc une cavité 45 débordant au-delà du soc de chaque côté de ce dernier. Chacune de ces cavités permet de former de part et d'autre du sillon des bourrelets 46 respectifs en relief formant des surplus de gomme s'étendant en saillie de la partie principale de la face 6. Chaque sillon s'étend donc entre les deux bourrelets 46 associés qui lui sont contigus.

Le nombre de sillons étant en l'espèce égal à cinq, on compte dix bourrelets. Les sillons 44 sont destinés à recevoir les cordons, puis à être comblés comme on le verra plus loin. La face 36 est également conformée pour former des sillons 50 en l'espèce au nombre de trois et destinés à persister de façon visible sur la bande de roulement et sur le pneumatique final, au contraire des sillons 44. Tous les sillons précités s'étendent parallèlement les uns aux autres et à la direction longitudinale de la bande 4.

Comme illustré à la figure 6, la lame 26 porte, en outre, en l'espèce, deux organes 52 formant des couteaux d'ébarbage du matériau pour délimiter les deux bords latéraux opposés de la bande. Ces organes sont disposés en regard l'un de l'autre, de part et d'autre du support 38.

La machine d'extrusion comprend des moyens 55 pour la réception de bobines 9 sur lesquelles sont enroulés

les cordons respectifs. Ces moyens sont agencés de façon à permettre aux bobines de se dévider au fur et à mesure de la fabrication.

L'ensemble 30 (voir les figures 6, 9 et 10) comprend des roues 32 qui sont en nombre égal, en l'espèce, à celui des cordons, à savoir au nombre de cinq. Les roues sont identiques entre elles et montées coaxialement les unes aux autres autour d'un axe horizontal 56. Elles s'étendent en regard de la lame 26 de sorte qu'un trajet 57 des cordons venant des bobines 9 passe entre l'ensemble 30 et la lame 26 avant leur insertion dans la bande de roulement. Au cours de ce trajet, les cordons viennent en appui contre le bord périphérique circonférentiel des roues 32 respectives. Chaque roue sert ainsi à guider le cordon correspondant jusqu'au fond du sillon pour l'y déposer, la roue pénétrant à cette fin à l'intérieur du sillon correspondant.

Les roues 32 sont montées sur un portique commun fixé au bâti et dont la position verticale est réglable afin de faire pénétrer les roues plus ou moins profondément dans les sillons, et donc d'insérer les cordons correspondants plus ou moins dans ces derniers. On ne prévoit pas en l'espèce de motorisation pour les roues 32, ces dernières étant entraînées en rotation par le défilement de la bande de roulement et les cordons insérés dans cette bande à la même vitesse périphérique que cette dernière. On peut prévoir une pièce de guidage intermédiaire telle qu'un tube traversé suivant son axe par les cordons pour leur guidage depuis les bobines 9 jusqu'à l'ensemble 30.

La figure 7 illustre la bande 4 avec ses sillons 44 ouverts au fond desquels les cordons composites 8 ont été déposés. Il s'agit sur cette figure de cordons à section transversale circulaire d'un diamètre d'environ 4 millimètres. La figure 8 illustre de façon analogue le cas d'une bande 4 dans les sillons 44 de laquelle sont disposés des cordons composites 8 et présentant une section transversale de forme parallélépipédique, par exemple carrée à 4 millimètres de côté.

En référence aux figures 2 et 11 à 14, l'ensemble de roulettage 34 comprend des organes de roulettage dont le nombre égale celui des cordons, à savoir cinq en l'espèce. L'un de ces organes 60 a été illustré à la figure 14. L'ensemble 34 comprend un support 62 rigidement fixé aux montants 14 et s'étendant de l'un à l'autre de ceux-ci. Chacun des organes 60 comprend un mât 64 de forme profilée, reçu dans un orifice femelle correspondant du support 62 en étant mobile à coulissement dans ce dernier suivant sa direction longitudinale qui est proche de la direction radiale à l'axe 24. L'ensemble 34 comprend pour chaque organe un élément de serrage 66 traversant la paroi du support 62 pour serrer le mât 64 contre une face interne du support et ainsi immobiliser l'organe 60 rigidement par rapport au support 62 dans la position de réglage choisie.

Chaque organe 60 comprend à une extrémité inférieure du mât un bras 68 portant deux roulettes dentées 70 montées rotatives sur le bras via des axes de rotation respectifs 72 coplanaires mais sécants et agencés de sorte que les roulettes ont une configuration ouverte vers l'amont par référence au sens de défilement de la bande. Les roulettes sont disposées de façon à venir en appui sur les bourrelets respectifs 46 associés au sillon considéré de façon à rabattre la matière formant ces reliefs dans le sillon par dessus le cordon 8 en vue de combler le sillon 44. Le cordon se trouve donc enfoui, recouvert et noyé dans la bande de roulement comme illustré aux figures 11 et 12 dans les deux cas correspondant aux figures 7 et 8 respectives.

Le procédé de fabrication de la bande de roulement est mis en oeuvre de la façon suivante au moyen de cette machine. Le matériau formant la gomme est amené dans le nez par le conduit 16 suivant la flèche 71, puis passe dans la chambre 25 où il est mis en pression avant d'être extrudé à travers l'orifice d'extrusion formé par la lame 26 et le rouleau 18. Au cours de cette opération qui met notamment en forme la face supérieure 6 de la bande, les socs 40 réalisent les sillons longitudinaux 44 dans la face 6, ainsi que les deux bourrelets 46 situés de part et d'autre de chaque sillon. Les socs se trouvent en partie arrière dans une zone de la machine où la pression est réduite par rapport à la pression régnant dans la chambre 25.

Les bobines 9 portant les cordons se dévident et les cordons guidés et soutenus par les roulettes 32 passent entre celles-ci et la lame 26 pour être insérées au fond des sillons respectifs 44 dans l'épaisseur de la bande de roulement. Les cordons se déroulent des bobines sous l'effet de l'entraînement de la bande qui entraîne également les roues 32. La bobine n'est freinée par aucun actionneur au cours de son mouvement.

La matière formant la bande est à ce stade encore chaude et molle. Lorsque la bande passe sous l'ensemble de roulettage 34, les roulettes 70 rabattent la matière des bourrelets 46 dans le sillon correspondant, noyant ainsi le cordon associé dans l'épaisseur de la bande de roulement. Le sillon se trouve ainsi bouché et comblé.

Ces opérations ont lieu successivement pour chaque section de bande considérée. Elles ont lieu en même temps pour l'ensemble de la bande, les bandes étant fabriquées en continu.

La figure 18 présente une coupe partielle d'un bandage pneumatique dans lequel a été incorporé dans une nervure de la bande de roulement 4 un cordon composite 8 tel que précédemment décrit aux figures 16 et 17.

La figure 19 illustre la coupe après un décorticage partiel, c'est-à-dire une extraction partielle réalisée avec un couteau, du cordon composite 8 de la bande de roulement 4. On constate l'existence de « ponts de gomme » 86 traversant les espacements 87 de la gaine 84. Ces ponts de gomme permettent de réaliser une excellente liaison mécanique entre le cordon composite et le mélange adjacent de la bande de roulement. Ils sont réalisés notamment par interdiffusion et covulcanisation des matériaux du coeur élastomère et de la bande de roulement. Il n'y a pas de

collage entre les fibres 85 et le matériau de la bande de roulement, c'est ce qui permet d'extraire le cordon composite de la bande de roulement après usure partielle de celle-ci.

Essais

Des cordons composites ont été réalisés et incorporés dans des bandes de roulement de bandages pneumatiques comme décrit ci-dessus. La formulation du coeur élastomère est donnée dans le tableau 1. Les quantités sont exprimées en parties pour 100 parties en poids d'élastomère (pce).

Tableau 1

| | Coeur |
|---|---|
| NR (1) | 100 |
| Charge A (2) | 50 |
| Agent de couplage (3) | 5 |
| antioxydant (4) | 2 |
| acide stéarique | 2,5 |
| oxyde de zinc (5) | 2,7 |
| accélérateur (6) | 1,8 |
| Soufre | 1,8 |
| (1) Caoutchouc naturel ;<br>(2) Charge A: silice « Zeosil 1165MP» de la société Rhodia, type « HD » ;<br>(3) Agent de couplage TESPT (« Si69 » de la société Degussa) ;<br>(4) N-1,3-diméthylbutyl-N-phénylparaphénylène diamine (Santoflex 6-PPD de la société Flexsys) ;<br>(5) Oxyde de zinc (grade industriel - société Umicore) ;<br>(6) N-cyclohexyl-2-benzothiazyl-sulfénamide (« Santocure CBS » de la société Flexsys). | |

La tresse utilisée est la tresse GREMFLEX® PA6.6 de la société Gremco de taille 10. Cette tresse présente un diamètre variable entre 7 et 12 mm. Cela permet d'incorporer aisément un coeur de cordon élastomère puis, par traction axiale selon la génératrice de la tresse venir appliquer la tresse contre la périphérie du coeur de cordon.

Résultats

Des bandages pneumatiques pour véhicule poids lourd de dimension 315/70 R 22.5 ont été réalisés comportant dans des cavités circonférentielles de leur bande de roulement des cordons cylindriques de géométrie similaire au cordon 8 de la figure 16 de diamètre de l'ordre de 6 mm, correspondant à la composition et à la gaine présentées ci-dessus. Les cavités ont été formées dans la bande de roulement et les cordons ont été introduits dans celles-ci à cru selon le procédé précédemment décrit. Les cordons étaient disposés au même niveau de la bande de roulement que les zones destinées à être recreusées de façon usuelle.

Ces bandages pneumatiques ont subi tout d'abord pendant 2 000 km un test sur volant sollicitant pour la bande de roulement où l'on alterne des roulages à fortes charge et dérive avec des roulages ligne droite à forte charge. Les bandages pneumatiques et leurs bandes de roulement ont bien résisté.

Les bandes de roulement des bandages pneumatiques ont ensuite été rabotées, c'est-à-dire que la bande de roulement a été usinée pour faire diminuer son épaisseur jusqu'à faire apparaître les gaines des cordons de recreusage. Les bandages pneumatiques ont ensuite subi des tests de comportement sur des pistes à l'état sec ainsi que sur des pistes revêtues d'une épaisseur d'eau.

Ces tests ont consisté en des roulages de quelques dizaines de km à vitesse normale de 90 km/h puis à vitesse limite de 125 km/h sur un circuit à l'état sec. Ensuite, les bandages pneumatiques ont été testés sur un circuit comportant de nombreux virages et revêtu d'eau pour vérifier si l'eau ne vient pas altérer la tenue du cordon dans la cavité.

Lors de tous ces essais, les cordons composites selon l'invention sont restés en place dans leurs cavités. Leur ancrage a été suffisant pour éviter tout mouvement relatif entre les cordons et le matériau adjacent de la bande de roulement avant et après rabotage des bandes de roulement. Les cordons ont pu ensuite être enlevés manuellement sans outillage spécifique et en une seule fois. Les rainures ainsi créées dans la bande de roulement ont été propres.

Les cordons de recreusage selon l'invention ont ainsi l'avantage de permettre une bonne maîtrise de leur

géométrie avant et après la confection du bandage pneumatique, de redonner une apparence propre de la sculpture après leur extraction et d'avoir une grande facilité de réalisation industrielle.

## Revendications

1. Bandage pneumatique ou non-pneumatique avec une bande de roulement (4),
**caractérisé**
**en ce que** la bande de roulement comporte dans au moins une cavité interne un cordon composite de recreusage (8) comportant un coeur élastomère (83) et une gaine (84) entourant le coeur élastomère, et **en ce que** ladite gaine est une tresse cylindrique creuse en fibres entrelacées (85) hélicoïdalement et non jointives.

2. Bandage selon la revendication 1, dans lequel les fibres (85) hélicoïdalement et non jointives définissent entre elles des espacements (87) qui ont une surface relative comprise entre 5 et 30 %.

3. Bandage selon la revendication 2, dans lequel les espacements (87) ont une surface relative comprise entre 10 et 20%.

4. Bandage selon l'une quelconque des revendications précédentes, dans lequel les fibres de ladite tresse sont choisies dans le groupe constitué par les polyamides, les polyesters, les polysulfones, les poly(sulfure de phénylène), les poly(éther-cétones), les polyétherimides, les poly(amide-imide), les polyimides, les élastomères thermoplastiques, leurs mélanges et leurs alliages.

5. Bandage selon l'une quelconque des revendications précédentes, dans lequel la composition du coeur élastomère est à base d'au moins un élastomère diénique.

6. Bandage selon la revendication 5, dans lequel l'élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

7. Bandage selon l'une des revendications 5 et 6, dans lequel la composition du coeur élastomère comporte plus de 30 parties en poids pour cent parties d'élastomère d'une charge notée A dont les particules sont des nanoparticules dont la taille moyenne en masse est inférieure à 500 nm.

8. Bandage selon la revendication 7, dans lequel la charge A comporte du noir de carbone.

9. Bandage selon l'une quelconque des revendications 7 et 8, dans lequel la charge A comporte une charge inorganique.

10. Bandage selon la revendication 9, dans lequel la charge inorganique est de la silice.

11. Bandage selon l'une quelconque des revendications 1 à 4, dans lequel le coeur élastomère est à base d'au moins un élastomère thermoplastique, ledit élastomère thermoplastique étant un copolymère bloc comprenant au moins un bloc élastomère insaturé et au moins un bloc thermoplastique.

12. Bandage selon la revendication 11, dans lequel le ou les élastomères thermoplastiques sont choisis dans le groupe constitué par les élastomères thermoplastiques styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

13. Bandage selon l'une quelconque des revendications 11 et 12, dans lequel l'élastomère thermoplastique est le seul élastomère du coeur élastomère.

14. Bandage selon l'une quelconque des revendications 11 et 12, dans lequel le coeur élastomère comprend en outre un ou plusieurs élastomères non thermoplastiques à un taux total d'au plus moins de 50 parties en poids pour cent parties d'élastomère et de préférence moins de 30 parties en poids pour cent parties d'élastomère.

15. Bandage selon l'une quelconque des revendications précédentes, tel que la plus grande dimension dans toute section droite du cordon composite de recreusage est comprise entre 3 et 20 mm.

**Patentansprüche**

1. Pneumatischer oder nicht pneumatischer Reifen mit einer Lauffläche (4), **dadurch gekennzeichnet, dass** die Lauffläche in wenigstens einem inneren Hohlraum einen Nachschneide-Verbundcord (8) umfasst, der einen Elastomerkern (83) und eine Hülle (84) umfasst, die den Elastomerkern umgibt, und dass die Hülle eine hohle zylindrische Umflechtung aus spiralförmig verschlungenen und nicht aneinandergesetzten Fasern (85) ist.

2. Reifen nach Anspruch 1, wobei die spiralförmig und nicht aneinandergesetzten Fasern (85) zwischen ihnen Freiräume (87) definieren, die eine relative Fläche zwischen 5 und 30 % aufweisen.

3. Reifen nach Anspruch 2, wobei die Freiräume (87) eine relative Fläche zwischen 10 und 20% aufweisen.

4. Reifen nach einem der vorhergehenden Ansprüche, wobei die Fasern der Umflechtung aus der Gruppe ausgewählt sind, die aus Polyamiden, Polyestern, Polysulfonen, Poly(phenylensulfid), Poly(etherketonen), Polyetherimiden, Poly(amid-imid), Polyimiden, thermoplastischen Elastomeren, ihren Mischungen und Legierungen besteht.

5. Reifen nach einem der vorhergehenden Ansprüche, wobei die Basis der Zusammensetzung des Elastomerkerns wenigstens ein dienisches Elastomer ist.

6. Reifen nach Anspruch 5, wobei das dienische Elastomer aus der Gruppe ausgewählt ist, die aus Polybutadienen, natürlichem Kautschuk, synthetischen Polyisoprenen, Butadien-Copolymeren, Isopren-Copolymeren und Mischungen dieser Elastomere besteht.

7. Reifen nach einem der Ansprüche 5 und 6, wobei die Zusammensetzung des Elastomerkerns auf hundert Teile des Elastomers mehr als 30 Gewichtsteile eines mit A bezeichneten Füllstoffs umfasst, dessen Partikel Nanopartikel sind, deren mittlere Größe bezogen auf die Masse unter 500 nm liegt.

8. Reifen nach Anspruch 7, wobei der Füllstoff A Kienruß umfasst.

9. Reifen nach einem der Ansprüche 7 und 8, wobei der Füllstoff A einen anorganischen Füllstoff umfasst.

10. Reifen nach Anspruch 9, wobei der anorganische Füllstoff Siliciumdioxid umfasst.

11. Reifen nach einem der Ansprüche 1 bis 4, wobei die Basis des Elastomerkerns wenigstens ein thermoplastisches Elastomer ist, wobei das thermoplastische Elastomer ein Blockcopolymer ist, das wenigstens einen ungesättigten Elastomerblock und wenigstens einen thermoplastischen Block umfasst.

12. Reifen nach Anspruch 11, wobei das oder die thermoplastischen Elastomere aus der Gruppe ausgewählt sind, die aus thermoplastischen Elastomeren des Typs Styrol / Butadien (SB), Styrol / Isopren (SI), Styrol / Butadien / Isopren (SBI), Styrol / Butadien / Styrol (SBS), Styrol / Isopren / Styrol (SIS), Styrol / Butadien / Isopren / Styrol (SBIS) und Mischungen dieser Elastomere besteht.

13. Reifen nach einem der Ansprüche 11 und 12, wobei das thermoplastische Elastomer das einzige Elastomer des Elastomerkerns ist.

14. Reifen nach einem der Ansprüche 11 und 12, wobei der Elastomerkern ferner ein oder mehrere nicht thermoplastische Elastomere in einem Gesamtanteil von höchstens weniger als 50 Gewichtsteilen auf hundert Teile Elastomer und vorzugsweise weniger als 30 Gewichtsteilen auf hundert Teile Elastomer umfasst.

15. Reifen nach einem der vorhergehenden Ansprüche, wobei die größte Abmessung im gesamten geraden Querschnitt des Nachschneide-Verbundcords zwischen 3 und 20 mm beträgt.

**Claims**

1. Pneumatic or non-pneumatic tyre with a tread (4),
**characterized in that** the tread comprises, in at least one internal cavity, a regrooving composite cord (8) comprising an elastomer core (83) and a sheath (84) surrounding the elastomer core and **in that** the said sheath is a hollow

cylindrical braid made of helically intertwined and non-contiguous fibres (85).

**2.** Tyre according to Claim 1, in which the helically and non-contiguous fibres (85) define, between them, spacings (87) which have a relative surface area of between 5% and 30%.

**3.** Tyre according to Claim 2, in which the spacings (87) have a relative surface area of between 10% and 20%.

**4.** Tyre according to any one of the preceding claims, in which the fibres of the said braid are selected from the group consisting of polyamides, polyesters, polysulphones, poly(phenylene sulphide)s, poly(etherketone)s, polyetherimides, poly(amide-imide)s, polyimides, thermoplastic elastomers, their mixtures and their alloys.

**5.** Tyre according to any one of the preceding claims, in which the composition of the elastomer core is based on at least one diene elastomer.

**6.** Tyre according to Claim 5, in which the diene elastomer is selected from the group consisting of polybutadienes, natural rubber, synthetic polyisoprenes, butadiene copolymers, isoprene copolymers and the mixtures of these elastomers.

**7.** Tyre according to either of Claims 5 and 6, in which the composition of the elastomer core comprises more than 30 parts by weight per hundred parts of elastomer of a filler denoted A, the particles of which are nanoparticles having a weight-average size of less than 500 nm.

**8.** Tyre according to Claim 7, in which the filler A comprises carbon black.

**9.** Tyre according to either one of Claims 7 and 8, in which the filler A comprises an inorganic filler.

**10.** Tyre according to Claim 9, in which the inorganic filler is silica.

**11.** Tyre according to any one of Claims 1 to 4, in which the elastomer core is based on at least one thermoplastic elastomer, the said thermoplastic elastomer being a block copolymer comprising at least one unsaturated elastomer block and at least one thermoplastic block.

**12.** Tyre according to Claim 11, in which the thermoplastic elastomer or elastomers are selected from the group consisting of styrene/butadiene (SB), styrene/isoprene (SI), styrene/butadiene/isoprene (SBI), styrene/butadiene/styrene (SBS), styrene/isoprene/styrene (SIS) and styrene/butadiene/isoprene/styrene (SBIS) thermoplastic elastomers and the mixtures of these copolymers.

**13.** Tyre according to either of Claims 11 and 12, in which the thermoplastic elastomer is the only elastomer of the elastomer core.

**14.** Tyre according to either of Claims 11 and 12, in which the elastomer core additionally comprises one or more non-thermoplastic elastomers at a total content of at most less than 50 parts by weight per hundred parts of elastomer and preferably less than 30 parts by weight per hundred parts of elastomer.

**15.** Tyre according to any one of the preceding claims, such that the greatest dimension in any cross section of the regrooving composite cord is between 3 and 20 mm.

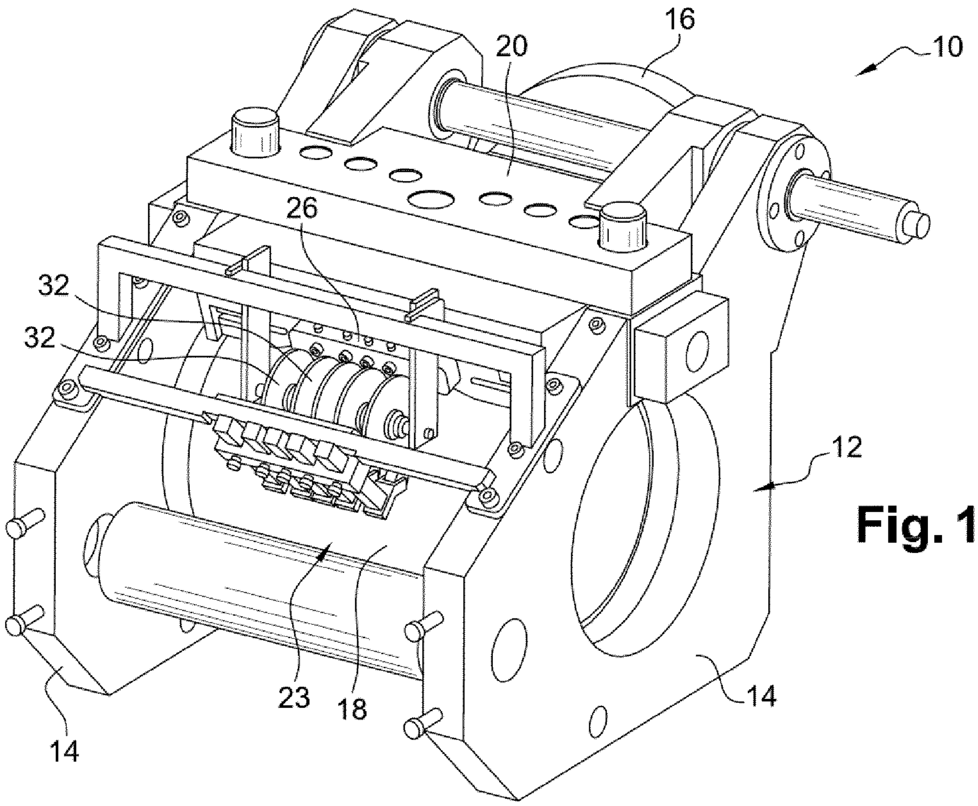
16
20
10
26
32
32
12
23
18
14
14

Fig. 1

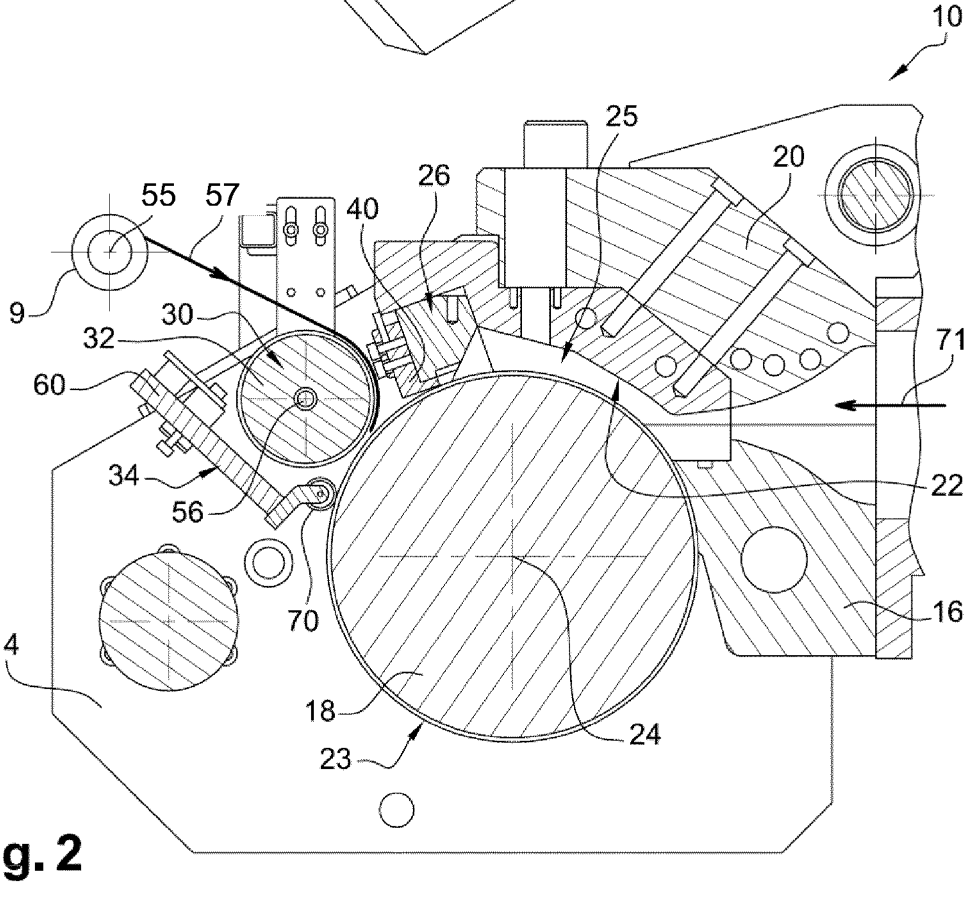
10
25
20
55
57
40
26
9
30
32
71
60
34
22
56
70
16
14
18
24
23

Fig. 2

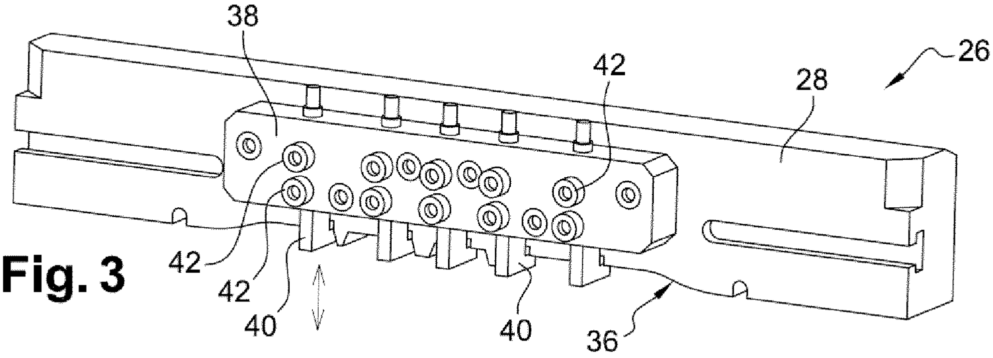


Fig. 3

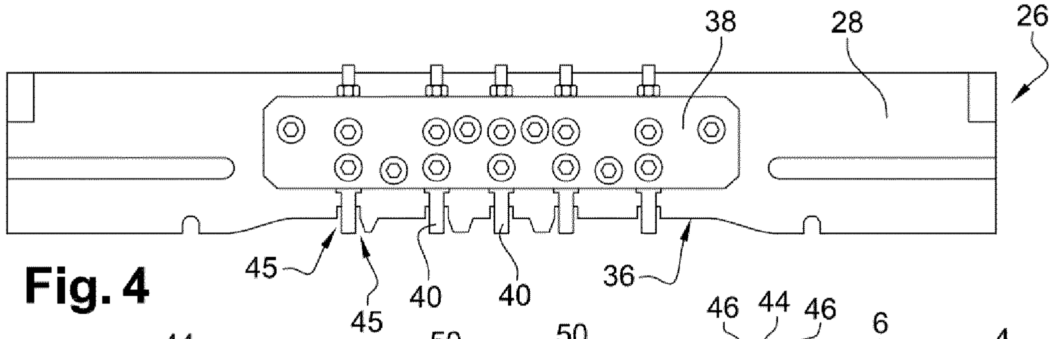


Fig. 4

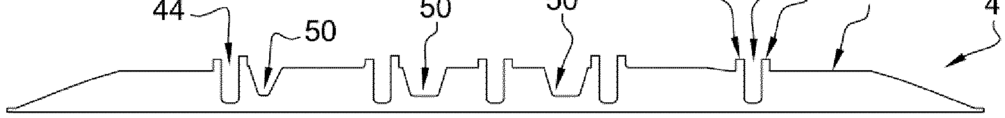


Fig. 5

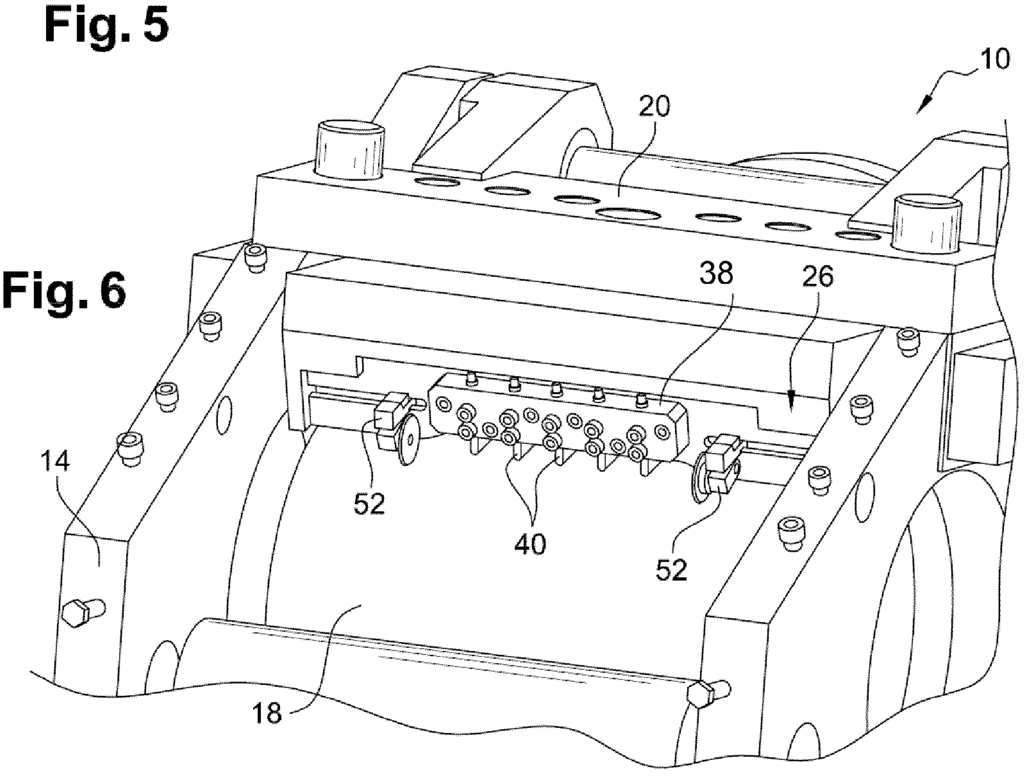


Fig. 6

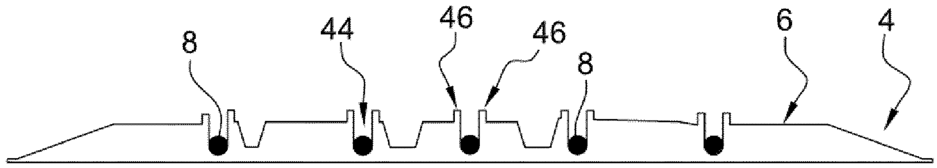


Fig. 7

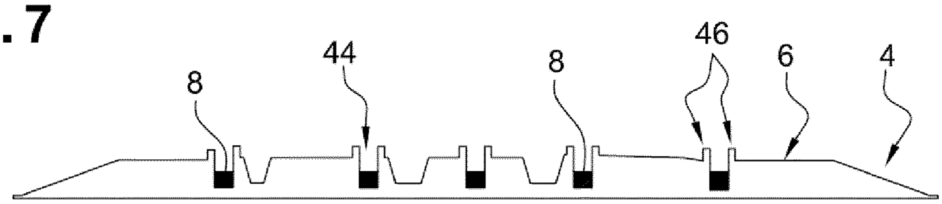


Fig. 8

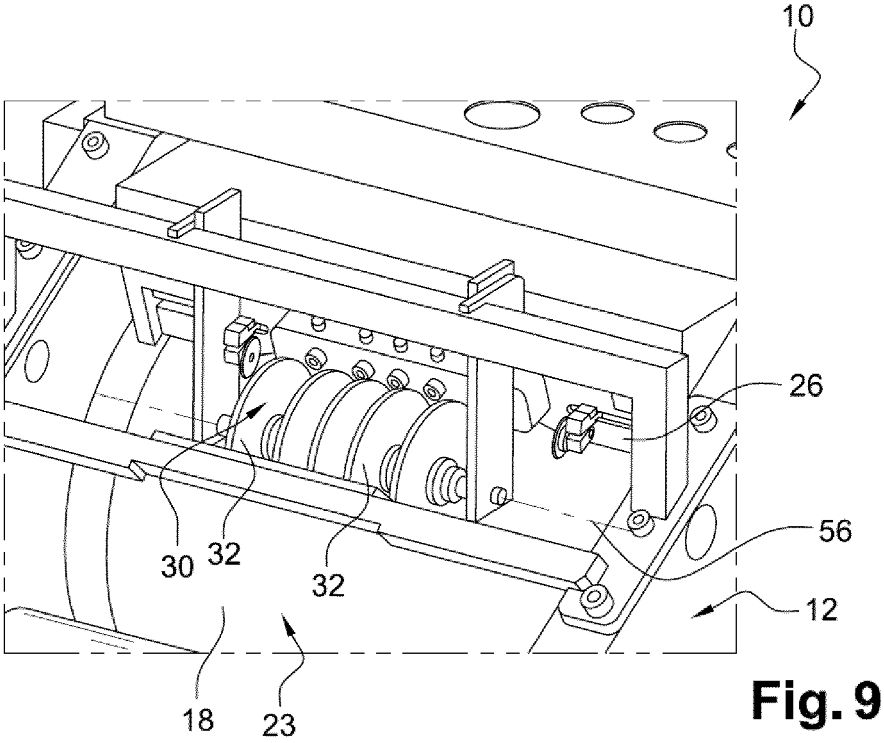


Fig. 9

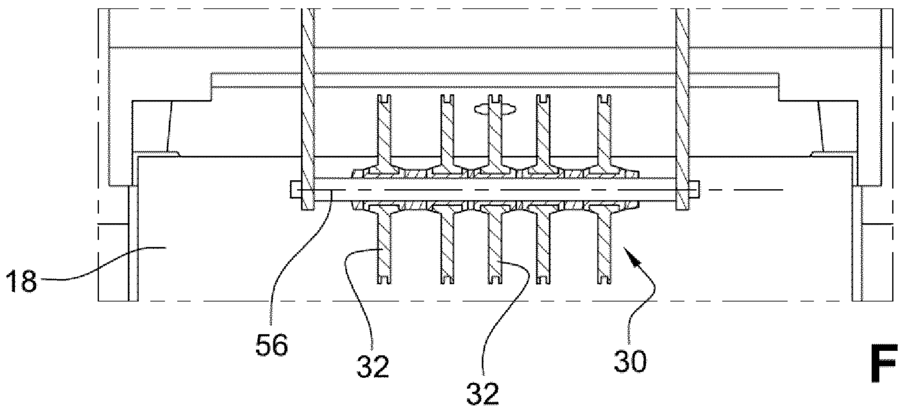


Fig. 10

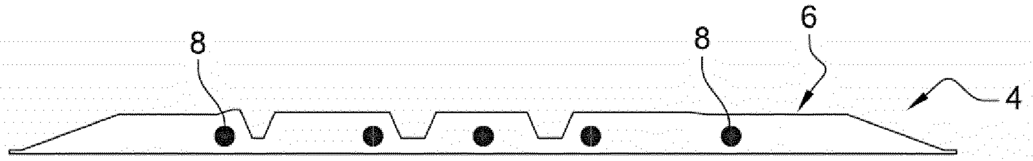


Fig. 11

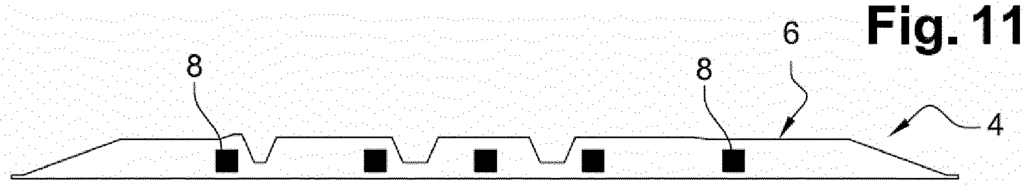


Fig. 12

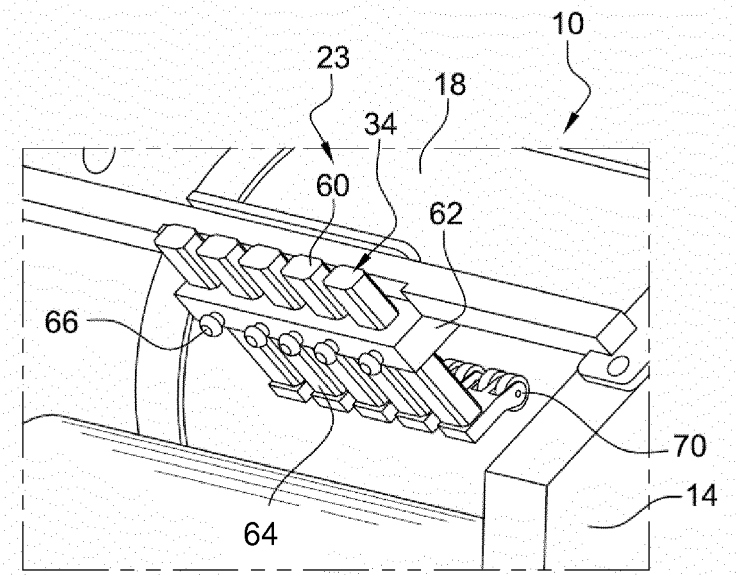


Fig. 13

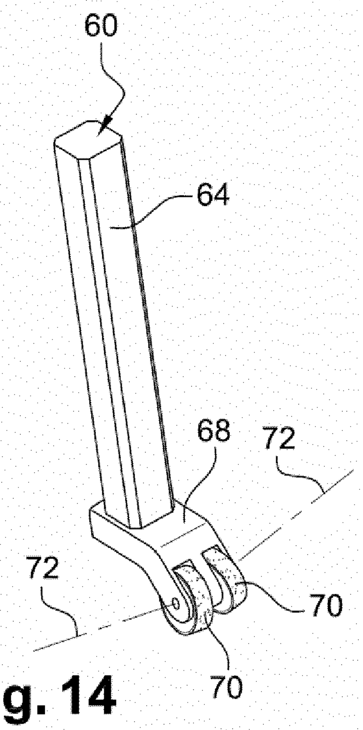


Fig. 14

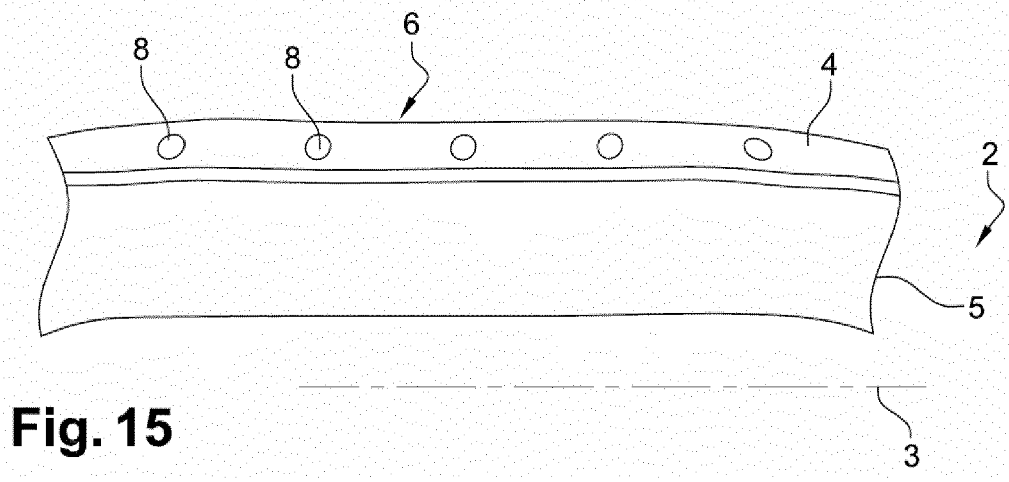


Fig. 15

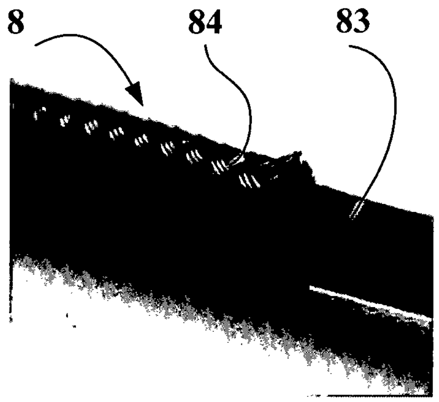


Fig. 16

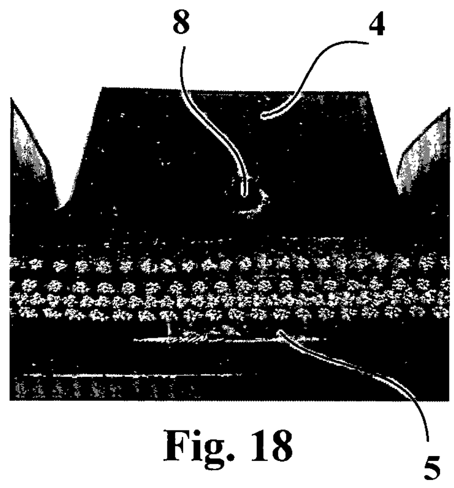


Fig. 18

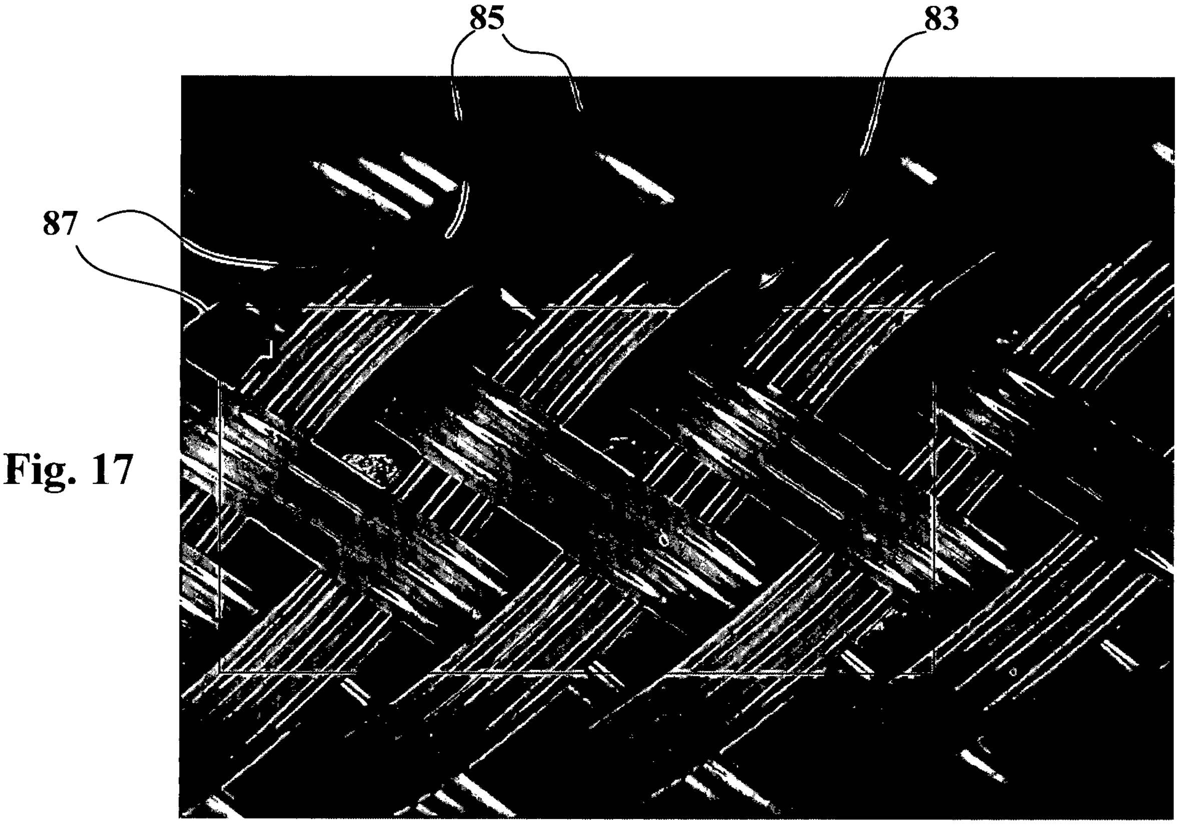


Fig. 17

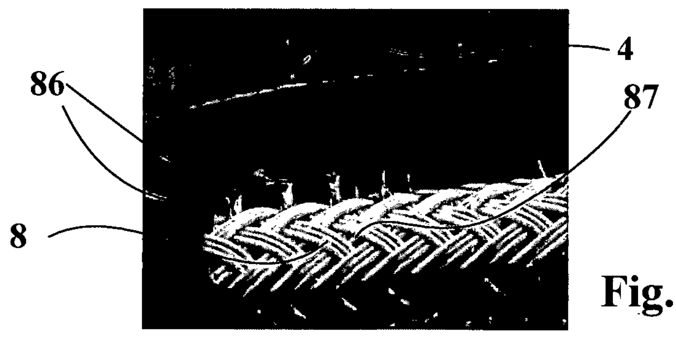


Fig. 19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6003576 A
- US 2148343 A
- EP 1392497 B1
- US 1400301 A
- US 2257646 A
- WO 9736724 A
- WO 9916600 A
- WO 2006069792 A
- WO 2006069793 A
- WO 0316387 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 0210269 A
- WO 2005087859 A
- WO 2006061064 A
- WO 2007017060 A
- US 4946899 A, Kennedy, Puskas, Kaszas et Hager


### Littérature non-brevet citée dans la description


- **Z. FODOR ; J.P. KENNEDY.** *Polymer Bulletin,* 1992, vol. 29 (6), 697-705
- **J. E. PUSKAS ; G. KASZAS ; J.P. KENNEDY ; W.G. HAGER.** Journal of Polymer Science. *Polymer Chemistry,* 1992, vol. 30, 41
- **J.P. KENNEDY ; N. MEGURIYA ; B. KESZLER.** *Macromolecules,* 1991, vol. 24 (25), 6572-6577
- **G. KASZAS ; J.E. PUSKAS ; P. KENNEDY.** *Applied Polymer Science,* 1990, vol. 39 (1), 119-144
- **J.E. PUSKAS ; G. KASZAS ; J.P. KENNEDY.** *Macromolecular Science,* 1991, 65-80